# EUROPÄISCHE PATENTSCHRIFT

(11) **EP 2 015 948 B1**
(45) Veröffentlichungstag und Bekanntmachung des Hinweises auf die Patenterteilung: **10.08.2016**
(21) Anmeldenummer: 07724473.9
(22) Anmeldetag: 23.04.2007
(51) Int. Cl.: B60H 1/00

(54) **KRAFTFAHRZEUG-KLIMAANLAGE**
MOTOR VEHICLE AIR CONDITIONING SYSTEM
INSTALLATION DE CLIMATISATION POUR VEHICULE AUTOMOBILE

(30) Priorität: 28.04.2006 DE 102006020379
(43) Veröffentlichungstag der Anmeldung: 21.01.2009
(73) Patentinhaber: MAHLE Behr GmbH & Co. KG, 70469 Stuttgart (DE)
(72) Erfinder: DIEKSANDER, Wolfgang, 70839 Gerlingen (DE); AUGULL, Michael, 71088 Holzgerlingen (DE)
(74) Vertreter: Grauel, Andreas
(86) Internationale Anmeldenummer: PCT/EP2007/003543
(87) Internationale Veröffentlichungsnummer: WO 2007/124881

(56) Entgegenhaltungen:
- EP-A- 1 607 254
- WO-A-2005/063517
- JP-A- 6 024 236
- US-A- 4 482 009
- US-A- 4 537 245
- US-A1- 2005 126 774

## Beschreibung

Die Erfindung betrifft eine Kraftfahrzeug-Klimaanlage gemäß dem Oberbegriff des Anspruches 1.

Aus der DE 10 2005 029 773 A1 ist eine Kraftfahrzeug-Klimaanlage mit einem Luftführungsgehäuse und in demselben angeordnete Komponenten, wie mindestens einem Heizer und einem Einlegeteil zur Luftführung und/oder -mischung bekannt. Hierbei lässt sich die Klimaanlage von einer mehrzonigen Klimaanlage in eine wenigerzonige Klimaanlage durch miteinander verbindbare Elemente umwandeln. Die Aufteilung in einzelne Klimazonen erfolgt mittels Trennwänden im Luftführungsgehäuse, die Teil des Einlegeteils sind. Vertikal im Luftführungsgehäuse angeordnete Trennwände trennen die Fahrer- und Beifahrerseite voneinander. Horizontal angeordnete Trennwände trennen den Frost- vom Fondbereich. Die Warmluft oder temperierte Luft der einzelnen, den entsprechenden Klimazonen ZI-ZIV zugeordneten Bereiche I-IV des Luftführungsgehäuses wird anschließend an einen Mischraum, geregelt durch einzelne Klappen, auf die entsprechenden Luftkanäle, wie beispielsweise dem Fondbelüftungsluftkanal und Fondfußraumluftkanal der Beifahrerseite, oder den Luftkanälen zur fahrerseitigen Frontbelüftung (Mittel- und Seitendüsen), dem Fußraum und dem Defrostkanal, die zu der entsprechenden Klimazone führen, verteilt. Um eine Temperaturschichtung der Luft zu ermöglichten, kann Kaltluft beigemischt werden,

Ein Beispiel einer herkömmlichen, dreizonigen Klimaanlage 101, wie sie in der DE 10 2005 029 773 A1 offenbart ist, ist in Figuren 6 bis 8 dargestellt. Hierbei sind in einem Luftführungsgehäuse 102 ein Verdampfer V und ein Heizer H angeordnet. Zwischen dem Verdampfer V und dem Heizer H sind vier neben- und übereinander angeordnete Temperaturklappen T1 bis T4 angeordnet, welche jeweils der entsprechenden Klimazone ZI bis ZIV zugeordnet sind, wobei die dem Fondbereich zugeordneten Temperaturklappen T3 und T4 gekoppelt sind, so dass der Fondbereich im Prinzip eine einzige Klimazone ZIII-ZIV bildet, während im Frontbereich zwei Klimazonen ZI und ZII vorgesehen sind. Die Klimazonen ZI bis ZIV des Fahrzeuginnenraums sind in der Zeichnung nicht dargestellt.

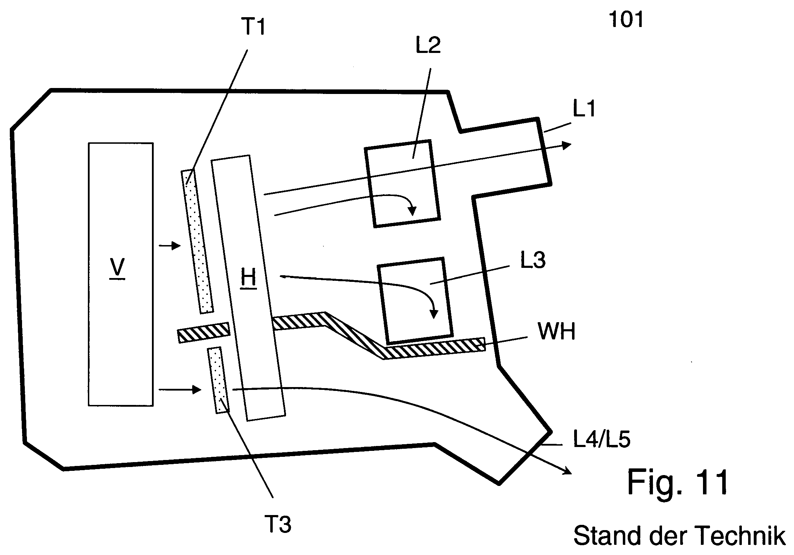

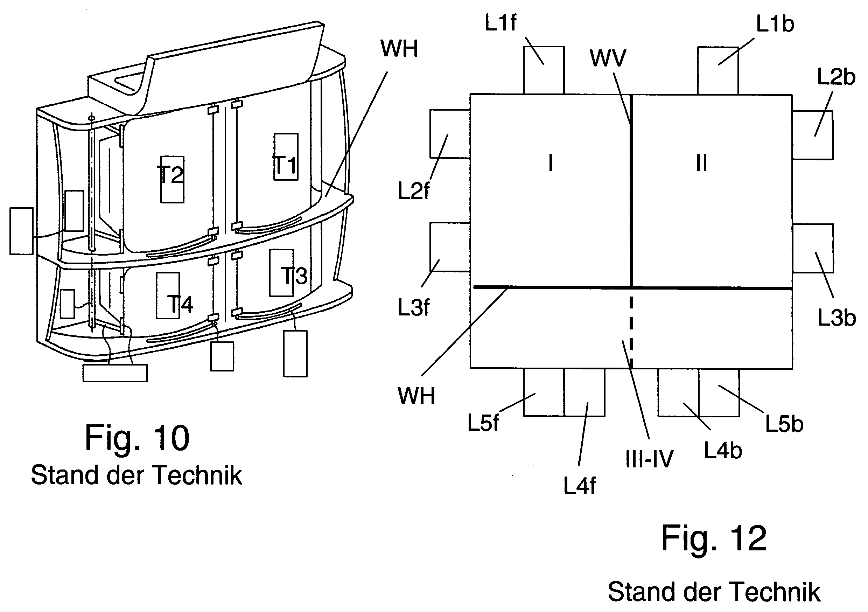

Der Luftstrom durch das Luftführungsgehäuse 102 ist vom Verdampfer V mittels Trennwänden getrennt, wobei eine Trennwand WH in horizontaler Richtung und eine Trennwand WV in vertikaler Richtung verläuft, d.h. ab dem Verdampfer V sind im Luftführungsgehäuse 102 vier einzelne Luftströme vorgesehen (Bereiche I-IV), die den Klimazonen ZI, ZII und ZIII-ZIV zugeordnet sind. Hinter dem Heizer H erfolgt für den Frontbereich eine Verteilung des jeweiligen Luftstroms auf einzelnen Front-Luftkanäle der Fahrerseite bzw. der Beifahrerseite, welche jeweils der Mitteldüse, der Seitendüse und dem Fußraum zugeordnet sind. Hierbei ist der der Mitteldüse zugeordnete Luftkanal mit dem Bezugszeichen L1, der der Seitendüse zugeordnete Luftkanal mit dem Bezugszeichen L2 und der dem Fußraum zugeordnete Luftkanal mit dem Bezugszeichen L3 bezeichnet. Für eine Unterscheidung von Fahrer- und Beifahrerseite wird dem Bezugszeichen ggf. noch ein "f" bzw. ein "b" angehängt. Für den Fondbereich sind beidseitig je zwei Luftkanäle L4, L5 vorgesehen, wobei der Luftkanal L4 jeweils der Belüftung dient und der Luftkanal L5 jeweils zum entsprechenden Fußraum auf der Fahrer- bzw. Beifahrerseite führt. Hierbei verläuft die horizontale Trennwand WH zwischen der Austrittsöffnung des Luftkanals L3 zum Front-Fußraum und der Austrittsöffnung des Luftkanals L4 zum Fond-Fußraum. Zur Verdeutlichung der Auswirkungen der Koppelung ist die vertikale Trennwand WV im unteren Bereich von Fig. 12 gestrichelt dargestellt. Die Strömungsrichtungen der einzelnen Luftströme sind in der Fig. 11 schematisch durch Pfeile angedeutet.

Ist im Falle einer vierzonigen Klimaanlage keine Koppelung der Temperaturklappen T3 und T4 vorgesehen, so können dieselben unabhängig voneinander betätigt werden, so dass auch die beiden Klimazonen ZIII und ZIV des Fondbereichs getrennt sind, d.h. es gibt eine fahrerseitige Klimazone ZIII und eine beifahrerseitige Klimazone ZIV - entsprechend der Bereiche III und IV im Luftführungsgehäuse 102.

Die JP 06024236 offenbart eine mehrzonige Klimaanlage für Kraftfahrzeuge, bei welcher die hinteren Sitze unabhängig von den vorderen Sitzen klimatisiert werden können. Dazu wird nach dem Verdampfer aus dem Klimagerät ein Luftlcanal abgezweigt, welcher in eine Heckanlage geführt wird und dort mittels Heizkörper temperiert wird.

Die US 2005/0126774 A1 offenbart eine Klimaanlage, welche ein erstes Gebläse aufweist zum Einlassen von Luft in das Klimagerät. Weiterhin ist ein zweites Gebläse vorgesehen um Luft zum Rücksitzbereich zu leiten.

Die WO 2005/063517 A1 offenbart eine mehrzonige Fahrzeugklimaanlage mit einem Mischraum für den Frontbereich und mit einem Mischraum für den Fondbereich.

Eine derartige Klimaanlage lässt noch Wünsche offen.

Es ist Aufgabe der Erfindung, eine verbesserte Kraftfahrzeug-Klimaanlage zur Verfügung zu stellen.

Diese Aufgabe wird gelöst durch eine Kraftfahrzeug-Klimaanlage mit den Merkmalen des Anspruchs 1. Vorteilhafte Ausgestaltungen sind Gegenstand der Unteransprüche.

Erfindungsgemäß ist eine mehrzonige Kraftfahrzeug-Klimaanlage mit mindestens einem Heizer und mindestens einem Verdampfer vorgesehen, die in einem Luftführungsgehäuse angeordnet sind, wobei im Inneren des Luftführungsgehäuses mindestens eine Trennwand vorgesehen ist, welche das Luftführungsgehäuse in mindestens zwei Bereiche unterteilt und dadurch den dem Fahrzeuginnenraum zuzuführenden Luftstrom in Teilluftströme auftrennt, die in dem Luftführungsgehäuse konditioniert und anschließend Klimazonen zugeführt werden. Hierbei zweigt von mindestens einem Bereich des Luftführungsgehäuses ein Luftkanal ab, der einen konditionierten Teilluftstrom einer anderen Klimazone des Fahrzeuginnenraums zuführt als der oder die anderen Luftkanäle, die von diesem besagten Bereich des Luftführungsgehäuses abzweigen, wobei der von diesem ersten Bereich des Luftführungsgehäuses abzweigende Luftkanal zum Fußraum des fahrerseitigen Frontbereichs führt und von dem, durch die Trennwand vom ersten Bereich getrennten zweiten Bereich ein Luftkanal zur fahrerseitigen Mitteldüse und ein Luftkanal zur fahrerseitigen Seitendüse des Frontbereichs abzweigen.

Beim besagten Luftkanal handelt es sich vorzugsweise um den Luftkanal, der zum Front-Fußraum führt. Dies ermöglicht eine Unterteilung der Frontzonen in eine obere Teil-Klimazone (Mittel- und Seitendüse) und eine untere Teil-Klimazone (Fußraum), wobei die Versorgung mit unabhängig voneinander temperierter Luft möglich ist.

Bevorzugt ist die Trennwand, welche die Austrittsöffnungen aus den Bereichen des Luftführungsgehäuses voneinander trennt horizontal oder annähernd horizontal verlaufend angeordnet. Dies ermöglicht in Hinblick auf die bekannte Anordnung der Austrittsöffnungen im Luftführungsgehäuse unter Verwendung von Einlegeteilen, wie bspw. in der DE 10 2005 029 773 A1 beschrieben, eine flexiblere Verwendbarkeit der Klimaanlage, so dass die Herstellungskosten, insbesondere auch für hochwertige Klimaanlagen, in Folge der Verwendung von Gleichteilen gesenkt werden können.

Vorzugsweise weist die Trennwand einen Versatz in Richtung der dem Frontbereich zugeordneten Bereiche auf. Hierbei ist unter Versatz kein Sprung zu verstehen, vielmehr ist die Trennwand in Hinblick auf einen optimalen Strömungsverlauf gekrümmt ausgebildet, wobei zumindest im Weseitlichen eben ausgebildete Bereiche anströmseitig und abströmseitig versetzt zueinander angeordnet sind.

Bevorzugt verringert sich die freie Querschnittsfläche senkrecht zur Luftströmungsrichtung durch das Luftführungsgehäuse hinter dem Heizer und vor oder in Höhe von Austrittsöffnungen zu den Luftkanälen für den Frontbereich im Verhältnis zur gesamten Querschnittsfläche. Entsprechend vergrößert sich die freie Querschnittsfläche senkrecht zur Luftströmungsrichtung durch das Luftführungsgehäuse hinter dem Heizer und vor oder in Höhe von Austrittsöffnungen zu den Luftkanälen für den Fondbereich im Verhältnis zur Gesamten Querschnittsfläche. Natürlich kann auch eine Teil-Querschnittsfläche konstant bleiben, während sich die andere Teil-Querschnittsfläche vergrößert oder verkleinert, so dass sich die Gesamt-Querschnittsfläche entsprechend der Veränderung der einen Teil-Querschnittsfläche vergrößert bzw. verkleinert.

Vorzugsweise führt mindestens ein Luftkanal aus dem Bereich, von dem besagter Luftkanal abzweigt, zu einer weiteren Klimaanlage, wobei es sich bevorzugt um eine mindestens zweizonige Heck-Klimaanlage handelt. Dies ermöglicht eine Vorkonditionierung der der Heck-Klimaanlage zugeführten Luft, so dass ggf. die Leistung des Verdampfers und/oder Heizers der HeckKlimaanlage geringer dimensioniert sein kann, um einen ausreichenden Komfort zur Verfügung zu stellen. Sind mehrere Austrittsöffnungen im Luftführungsgehäuse vorgesehen, welche mit nach hinten zur Heck-Klimaanlage führenden Luftkanälen verbunden sind, so sind bevorzugt diese Luftkanäle zusammengeführt, insbesondere bevorzugt in einen einzigen, gemeinsamen Luftkanal. In diesem Luftkanal - ggf. auch entsprechend bei getrennten Luftkanälen - ist vorzugsweise eine steuerbare Klappe vorgesehen, welche den Luftkanal verschließen und eine Öffnung zum Fahrzeuginnenraum freigeben kann, so dass die der Heck-Klimaanlage zuzuführende Luft sowohl vorkonditionierte Luft von der Front-Klimaanlage als auch Umluft aus dem Fahrzeuginnenraum sein kann. Ebenfalls kann die Luftversorgung der HeckKlimaanlage auch die Einbeziehung von Frischluft vorsehen, die von der Umgebung angesaugt werden kann.

Alternativ zu einer zweiten Klimaanlage für den Fondbereich kann auch ein zusätzliches Gebläse vorgesehen sein, welches - geregelt über Fondklappen - temperierte Luft in den Fondbereich fördert. Insbesondere bevorzugt sind zusätzliche Kaltluft-Bypässe um den Heizer vorgesehen, welche dem Fondbereich zugeordnet sind. Insbesondere bevorzugt sind vier derartige Abgänge zum Fondbereich vorgesehen.

Im Folgenden wird die Erfindung anhand von Ausführungsbeispielen unter Bezugnahme auf die Zeichnung im Einzelnen erläutert. Es zeigen:
- Fig. 1: einen stark schematisierten Längsschnitt durch eine Kraftfahrzeug-Klimaanlage gemäß dem ersten Ausführungsbeispiel,
- Fig. 2: einen stark schematisierten Querschnitt durch die Klimaanlage von Fig. 1,
- Fig. 3: einen stark schematisierten Längsschnitt durch eine Kraftfahrzeug-Klimaanlage gemäß dem zweiten Ausführungsbeispiel,
- Fig. 4: einen stark schematisierten Querschnitt durch die Klimaanlage von Fig. 3,
- Fig. 5: einen stark schematisierten Längsschnitt durch eine Kraftfahrzeug-Klimaanlage gemäß dem dritten Ausführungsbeispiel,
- Fig. 6: einen stark schematisierten Längsschnitt durch eine Kraftfahrzeug-Klimaanlage gemäß einer Abwandlung des dritten Ausführungsbeispiels,
- Fig. 7: eine perspektivische, aufgeschnittene Ansicht der Kraftfahrzeug-Klimaanlage von Fig. 6 im Bereich von Temperaturklappen,
- Fig. 8: eine erste schematische Darstellung zur Verdeutlichung der Fond-Klimatisierung der Klimaanlage von Fig. 6,
- Fig. 9: eine zweite schematische Darstellung zur Verdeutlichung der Fond-Klimatisierung der Klimaanlage von Fig. 6,
- Fig. 10: eine perspektivische, aufgeschnittene Ansicht einer bekannten Kraftfahrzeug-Klimaanlage im Bereich von Temperaturklappen,
- Fig. 11: einen stark schematisierten Längsschnitt durch die Klimaanlage von Fig. 10,
- Fig. 12: einen stark schematisierten Querschnitt durch die Klimaanlage von Fig. 10.

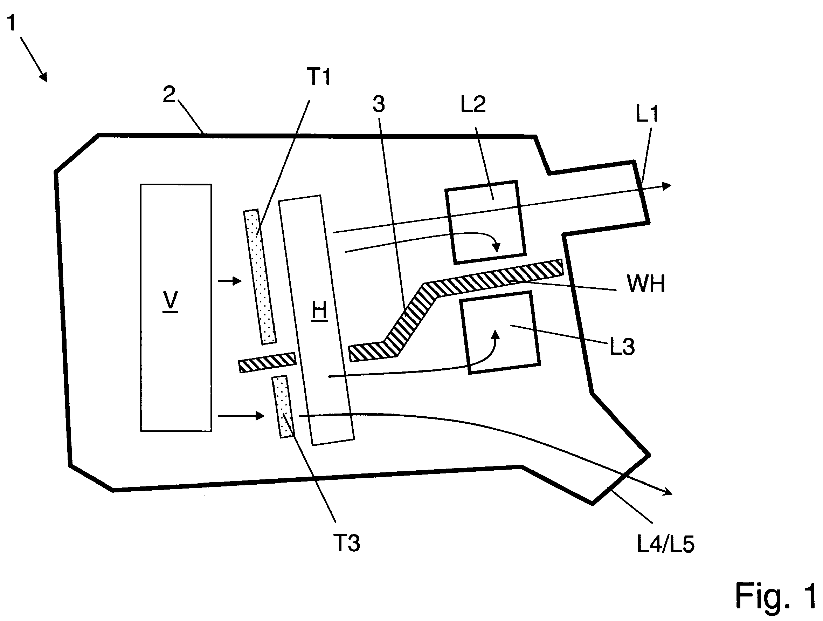

Eine vierzonige Kraftfahrzeug-Klimaanlage 1 gemäß dem ersten Ausführungsbeispiel mit den Klimazonen ZI bis ZIV (nicht dargestellt) weist ein Luftführungsgehäuse 2 auf, in welchem ein der Lufttemperierung dienender Verdampfer V und Heizer H angeordnet sind. Zwischen dem Verdampfer V und dem Heizer H ist eine vertikale Trennwand WV angeordnet, welche in der Bildebene der Schnittdarstellung von Fig. 1 verläuft und die Bereiche I und III von den Bereichen II und IV des Luftführungsgehäuses trennt, welche den Klimazonen der Fahrerseite (Front und Fond) bzw. den Klimazonen der Beifahrerseite (Front und Fond) zugeordnet sind.

Ferner ist eine horizontale Trennwand WH vorgesehen, welche die Bereiche I und II von den Bereichen III und IV des Luftführungsgehäuses 2 und somit im Wesentlichen die Klimazonen ZI und ZII von den Klimazonen ZIII und ZIV des Fahrzeuginnenraums, also die Klimazonen des Front- und Fondbereichs, voneinander trennt, wobei gemäß dem vorliegende Ausführungsbeispiel sowohl auf Fahrer- als auch Beifahrerseite jeweils der dem Fußraum des Frontbereichs zuzuführende Luftstrom nicht vom übrigen, der entsprechenden Klimazone ZI bzw. ZII des Frontbereichs zuzuführenden Luftstrom, also vom Bereich I bzw. II des Luftführungsgehäuses 2, sondern von dem dem Fondbereich zugedachten Luftstrom, also vom Bereich III bzw. IV des Luftführungsgehäuses 2, abgezweigt wird, worauf an späterer Stelle näher eingegangen wird.

Die Luftströme der einzelnen Bereiche I bis IV, welche durch die Trennwände WH und WV voneinander getrennt werden, entsprechen daher nicht vollständig denjenigen, den einzelnen Klimazonen ZI bis ZIV zugeführten Luftströmen, da eine "Querströmung" vom Fondbereich zum Frontbereich vorgesehen ist.

Von den Trennwänden WH und WV unterteilt, ist zwischen dem Verdampfer V und dem Heizer H eine in der Zeichnung nicht näher dargestellte Wand, die im Wesentlichen senkrecht zur Luftströmungsrichtung angeordnet ist, mit durch Temperaturklappen T1 bis T4 regelbaren Öffnungen vorgesehen, welche im Wesentlichen der Darstellung von Fig. 10 entspricht.

Eine Ausgestaltung des allgemeinen Aufbaus der Klimaanlage mit Einlegeteile(n) und eine Koppelung einzelner Temperaturklappen kann - wie in der DE 10 2005 029 773 A1 beschrieben - vorliegen, so dass der Offenbarungsgehalt dieser Offenlegungsschrift ausdrücklich mit einbezogen wird.

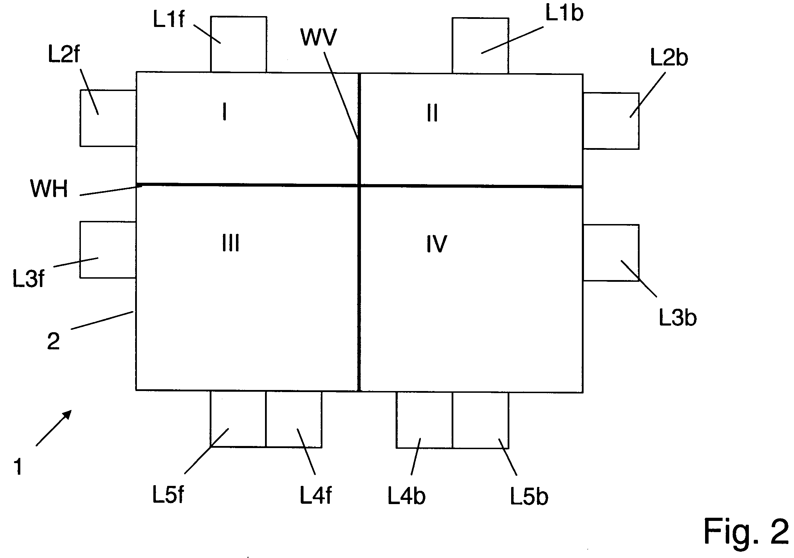

Vom Luftführungsgehäuse 2 zweigen, in Luftströmungsrichtung gesehen beabstandet hinter dem Heizer, mittels Klappen (nicht dargestellt) stufenlos verschließbare Luftkanäle L1 - L5 ab, wobei die Ausgestaltung vorliegend spiegelbildlich zur Mittellängsebene des Kraftfahrzeugs ist, d.h. die fahrerseitigen Luftkanäle L1f - L5f sind spiegelbildlich zu den beifahrerseitigen Luftkanälen L1 b - L5b angeordnet. Wie am besten aus Fig. 2 ersichtlich, zweigen aus dem mit I bezeichneten Bereich des Luftführungsgehäuses 2, welcher der Klimazone ZI des Fahrzeuginnenraums, also dem fahrerseitigen Frontbereich, zugeordnet ist, der Luftkanal L1f zur fahrerseitigen Mitteldüse und der Luftkanal L2f zur fahrerseitigen Seitendüse ab.

Aus dem mit III bezeichneten Bereich des Luftführungsgehäuses 2, welcher im Wesentlichen der Klimazone ZIII des Fahrzeuginnenraums zugeordnet ist, also dem fahrerseitigen Fondbereich, zweigen drei Luftkanäle ab, nämlich der Luftkanal L4f, welcher der Belüftung des fahrerseitigen Fondbereichs dient, und der Luftkanal L5f, welcher zum entsprechenden Fußraum führt. Ferner - und im Unterschied zu herkömmlichen Klimaanlagen - zweigt von diesem Bereich des Luftführungsgehäuses 2 ein Luftkanal L3f ab, welcher zum Fußraum des fahrerseitigen Frontbereichs führt, d.h. die Bereiche I bis IV des Luftführungsgehäuses 2 entsprechen nicht vollständig den Klimazonen ZI bis ZIV, da durch den Luftkanal L3f (und auf der Beifahrerseite entsprechend durch den Luftkanal L3b) eine Querströmung vom Bereich III (bzw. IV) des Luftführungsgehäuses 2 zur Klimazone ZI (bzw. ZII) des Fahrzeuginnenraums vorgesehen ist.

Die horizontale Trennwand WH verläuft, wie aus Fig. 1 ersichtlich, im Wesentlichen horizontal, d.h. parallel zur Fahrzeugebene, wobei sie hinter dem Heizer H eine Stufe 3 nach oben aufweist, die in Fig. 1 stark schematisiert dargestellt ist. Diese Stufe 3 führt zu einem Versatz in Richtung nach "oben", wodurch die freie Querschnittsfläche des Bereichs I-II oberhalb der horizontalen Trennwand WH verkleinert und die freie Querschnittsfläche des Bereichs III-IV unterhalb der horizontalen Trennwand WH vergrößert wird. Bei der Trennwand kann es sich um ein Einlegeteil handeln, wie in der DE 10 2005 029 773 A1 beschrieben, so dass am Luftführungsgehäuse 2 in Hinblick auf die Anordnung der Austrittsöffnungen für die Luftkanäle L1 bis L5 im Prinzip keine Änderungen erforderlich sind.

Eine derartige Ausgestaltung ermöglicht es, dass die Klimazonen des Frontbereichs im Prinzip unterteilt sind in die Teil-Klimazone Seiten-Mitteldüse und die Teil-Klimazone Fußraum, wobei die Teil-Klimazone Fußraum vorliegend mit dem Fondbereich gekoppelt ist. Somit ist es möglich, dass bspw. der Fahrer einen warmen Fußraum und einen kühlen oberen Bereich und der Beifahrer einen kalten Fußraum und einen warmen oberen Bereich hat.

Die dem Fondbereich zuzuführende Luft ist somit durch die Einstellungen für den Frontbereich vorkonditioniert. Eine derartige Klimaanlage ist insbesondere für Zweisitzer mit Notrückbank geeignet. Ist die Rückbank besetzt, so kann die Regelung für den Fondbereich - von Hand oder automatisch - beispielsweise an die des oberen Frontbereichs angepasst werden.

Zur abschließenden Konditionierung der dem Fondbereich zuzuführenden Luft können - insbesondere bei Viersitzern oder auch Kraftfahrzeugen mit mehr als zwei Sitzreihen - bekannte Heckanlagensysteme verwendet werden. Diese können vorzugsweise auch Klappen zur Einspeisung von Kabinen- und/oder Frischluft aufweisen, um auch im Fondbereich einen hohen Komfort zu ermöglichen. Hierauf wird an späterer Stelle im Rahmen des dritten Ausführungsbeispiels näher eingegangen.

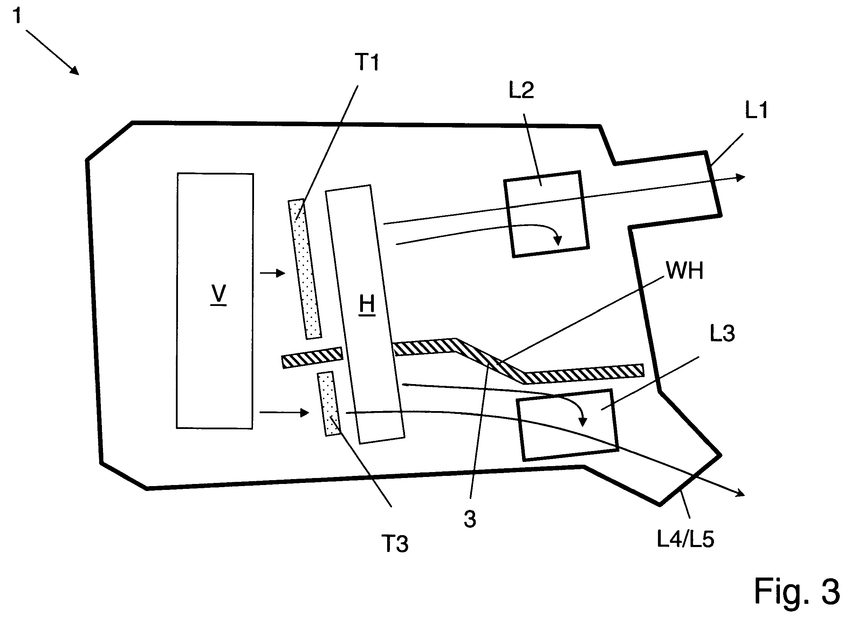

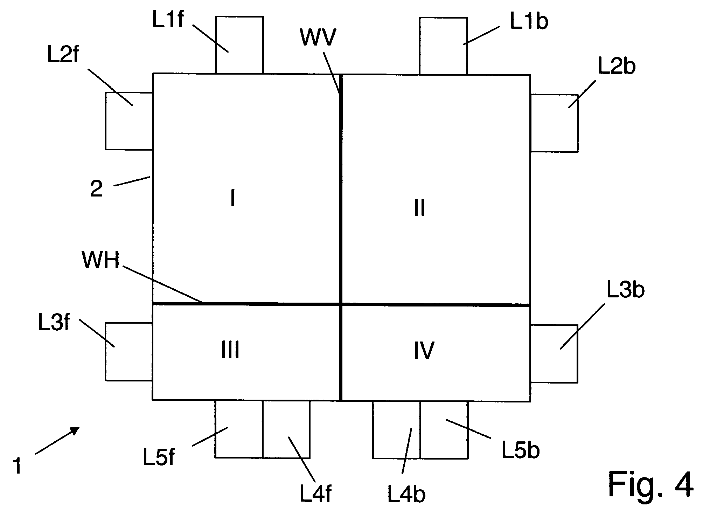

Das zweite, in den Figuren 3 und 4 dargestellte Ausführungsbeispiel entspricht im Wesentlichen dem ersten Ausführungsbeispiel, so dass in der Zeichnung die gleichen Bezugszeichen verwendet sind. Im Unterschied zum ersten Ausführungsbeispiel ist die Austrittsöffnung der Luftkanäle L3 nach unten versetzt. Ebenso ist die horizontale Trennwand WH derart ausgebildet, dass der Versatz, d.h. die Stufe 3 nicht nach oben, sondern nach unten ausgebildet ist. Die Luftkanäle L3 sorgen, wie beim zuvor beschriebenen ersten Ausführungsbeispiel dafür, dass der Frontbereich vierzonig ausgebildet ist, wobei wiederum eine obere Klimazone und die Fußraum-Klimazone jeweils auf Fahrer- und Beifahrerseite zur Verfügung gestellt wird. Die übrige Luft der Bereiche III und IV, die durch die Luftkanäle L4 und L5 strömt, wird dem Heckbereich zugeführt, in dem wiederum nur eine Notbank vorgesehen ist. Alternativ kann auch - im Falle eines Vier- oder Mehrsitzers - die vorkonditionierte Luft einer Heck-Klilmaanlage zugeführt werden.

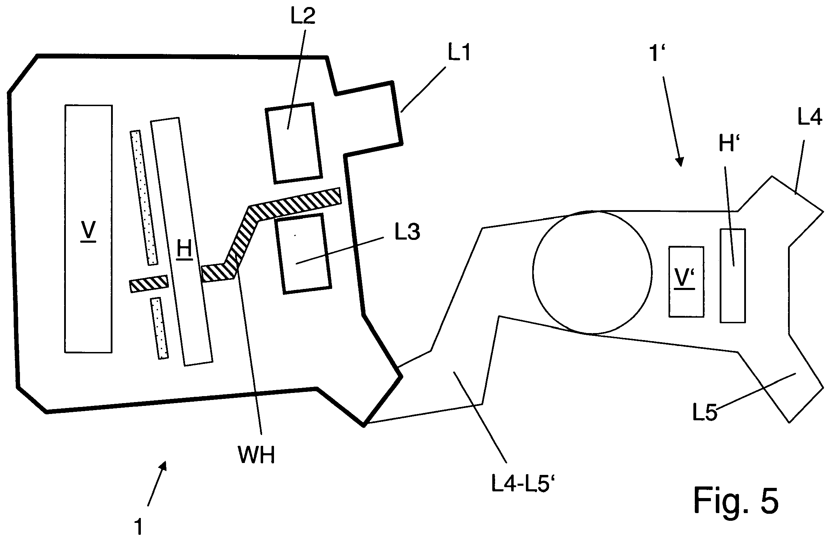

In Fig. 5 ist als drittes Ausführungsbeispiel eine Klimaanlage 1, welche derjenigen des ersten Ausführungsbeispiels vollständig entspricht, und eine zweizonige Heck-Klimaanlage 1' vorgesehen. Die Klimaanlage 1 ermöglicht, wie vorstehend näher beschrieben, eine vierzonige Temperierung des Frontbereichs, wobei wiederum eine obere Klimazone und die Fußraum-Klimazone jeweils auf Fahrer- und Beifahrerseite zur Verfügung gestellt wird.

Die Luftkanäle L4 und L5 der Fahrer- und Beifahrerseite sind gemäß dem dritten Ausführungsbeispiel zusammengeführt und werden in einem einzigen Luftkanal L4-L5' nach hinten geführt, so dass die vorkonditionierte Luft der Heck-Klimaanlage 1' zugeführt wird. Die Heck-Klimaanlage 1' weist einen zweiten Verdampfer V' und einen zweiten Heizer H' auf, welche die vorkonditionierte Luft konditionieren. Auch hier sind Trennwände (nicht dargestellt) vorgesehen, welche die Luftströme der Belüftungen (L4) von Fahrer- und Beifahrerseite und der Fußräume (L5) von Fahrer- und Beifahrerseite jeweils trennen.

Im Luftkanal L4-L5' ist eine Öffnung zum Fahrzeuginnenraum hin vorgesehen, wobei eine Klappe (nicht dargestellt) diese Öffnung regelbar verschließt, wenn ausschließlich konditionierte Luft von der Front-Klimaanlage 1 der Heck-Klimaanlage 1' zugeführt werden soll. Wird die Klappe geöffnet, so verschließt sie - entsprechend ihrer Öffnungsstellung - automatisch den Luftkanal in Richtung der Front-Klimaanlage 1, so dass je nach Stellung Luft sowohl von der Front-Klimaanlage 1 als auch vom Fahrzeuginnenraum der Heck-Klimaanlage 1' zugeführt wird. In der vollständig geöffneten Stellung der Klappe wird der Luftkanal L4-L5' zur Front-Klimaanlage 1 hin vollständig geschlossen, so dass ausschließlich Luft aus dem Fahrzeuginnenraum angesaugt und der Heck-Klimaanlage 1' zugeführt wird.

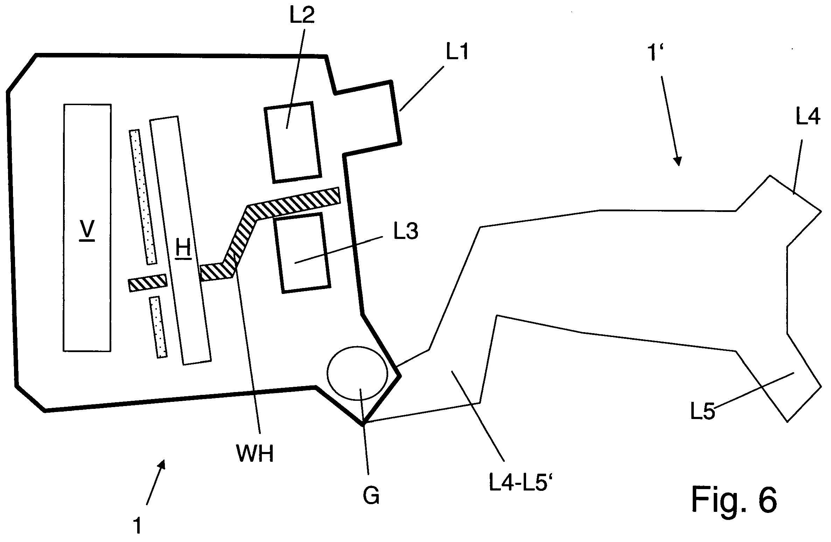

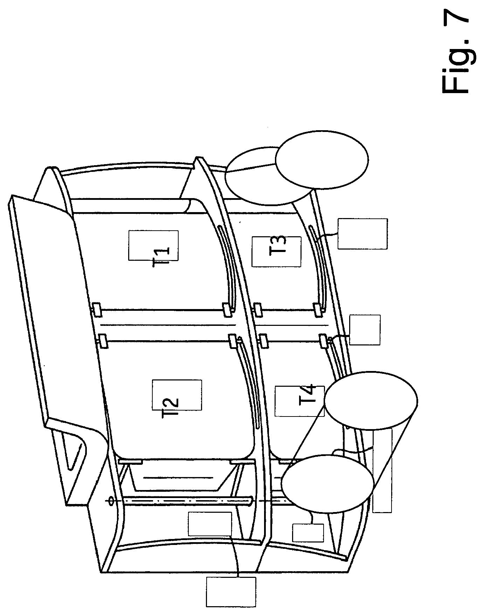

Gemäß einer Abwandlung des dritten Ausführungsbeispiels ist ein zusätzliches Gebläse G (Booster) am Anfang des Luftkanals L4-L5' angeordnet und die Heck-Klimaanlage 1', d.h. der zweite Heizer H' und der Verdampfer V' entfallen (siehe Fig. 6). Durch dieses Gebläse G wird bei geeigneter Klappenstellung mehr temperierte Luft dem Fondbereich zugeführt. Hierbei ist, wie in Fig. 7 schematisch angedeutet, jeweils außenseitig verlaufend ein Kaltluft-Bypass um den Heizer H vorgesehen. Ferner sind vorliegend vier Fondabgänge F1-F4 vorgesehen, wobei die Fondabgänge F1 und F2 zur linken Fond-Klimazone führen und die Fondabgänge F3 und F4 zur rechten Fond-Klimazone führen, und die Fondabgänge jeweils durch Fondklappen (nicht dargestellt) geregelt werden.

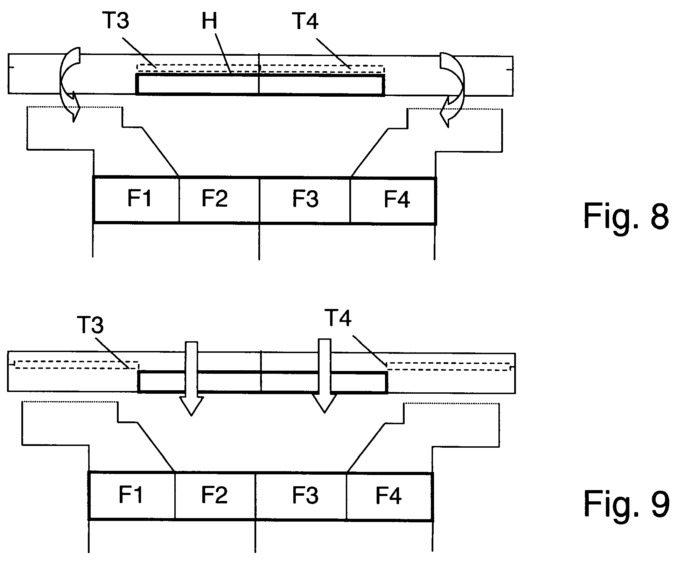

Wie aus den Figuren 8 und 9 ersichtlich, wird die Fondtemperatur links minimal, wenn F1 offen und F2 geschlossen ist. Die entsprechende Fondtemperatur wird maximal, wenn F1 geschlossen und F2 offen ist. Im Falle einer Zwischenstellung von F1 und F2 ergibt sich eine Mischtemperatur, und wenn F1 und F2 geschlossen sind, gelangt keine Luft in den Fondbereich. Entsprechendes gilt für die Fondtemperatur rechts in Zusammenhang mit F4 und F3.

Durch diese Ausgestaltung lässt sich beispielsweise die folgende Temperierung erzielen: Belüftung (und Defrost) auf der Fahrerseite "mittel", Fußraum auf der Fahrerseite "warm", Fondbereich auf der Fahrerseite "kalt". Belüftung (und Defrost) auf der Beifahrerseite "warm", Fußraum auf der Fahrerseite "mittel", Fondbereich auf der Fahrerseite "warm".

Eine entsprechende Ausgestaltung mit zusätzlichem Gebläse ist auch für eine reine Frontanlage möglich, so dass in diesem Fall sechs FrontKlimazonen realisierbar sind.

## Patentansprüche

1. Mehrzonige Kraftfahrzeug-Klimaanlage mit mehr als zwei Zonen mit mindestens einem Heizer (H) und mindestens einem Verdampfer (V), die in einem Luftführungsgehäuse (2) angeordnet sind, wobei im Inneren des Luftführungsgehäuses (2) mindestens eine Trennwand (WH) vorgesehen ist, welche das Luftführungsgehäuse (2) in mindestens zwei Bereiche (I-II, III-IV) unterteilt und dadurch den dem Fahrzeuginnenraum zuzuführenden Luftstrom in Teilluftströme auftrennt, die in dem Luftführungsgehäuse (2) konditioniert und anschließend Klimazonen (ZI-ZIV) zugeführt werden, wobei von mindestens einem ersten Bereich (III oder IV) des Luftführungsgehäuses (2) ein Luftkanal (L3) abzweigt, der einen konditionierten Teilluftstrom einer anderen Klimazone (ZI oder ZII) des Fahrzeuginnenraums zuführt als der oder die anderen Luftkanäle (L4, L5), die von diesem ersten Bereich (III bzw. IV) des Luftführungsgehäuses (2) abzweigen, **dadurch gekennzeichnet, dass** der von diesem ersten Bereich (III oder IV) des Luftführungsgehäuses (2) abzweigende Luftkanal (L3f) zum Fußraum des fahrerseitigen Frontbereichs führt und von dem, durch die Trennwand (WH) vom ersten Bereich (III oder IV) getrennten zweiten Bereich (I oder II) ein Luftkanal (L1f) zur fahrerseitigen Mittefdüse und ein Luftkanal (L2f) zur fahrerseitigen Seitendüse des Frontbereichs abzweigen.

2. Kraftfahrzeug-Klimaanlage nach Anspruch 1, **dadurch gekennzeichnet, dass** die Trennwand (WH), welche die Austrittsöffnungen aus den Bereichen (I, II und III, IV) des Luftführungsgehäuses (2) voneinander trennt, horizontal oder annähernd horizontal verlaufend angeordnet ist.

3. Kraftfahrzeug-Klimaanlage nach Anspruch 2, **dadurch gekennzeichnet, dass** die Trennwand (WH) einen Versatz in Richtung der Bereiche (I und II), welche dem Frontbereich zugeordnet sind, aufweist.

4. Kraftfahrzeug-Klimaanlage nach einem der vorhergehenden Ansprüche, **dadurch gekennzeichnet, dass** sich die freie Querschnittsfläche senkrecht zur Luftströmungsrichtung durch das Luftführungsgehäuse (2) hinter dem Heizer (H) und vor oder in Höhe von Austrittsöffnungen zu den Luftkanälen für den Frontbereich im Verhältnis zur Gesamten Querschnittsfläche verringert.

5. Kraftfahrzeug-Klimaanlage nach einem der vorhergehenden Ansprüche, **dadurch gekennzeichnet, dass** sich die freie Querschnittsfläche senkrecht zur Luftströmungsrichtung durch das Luftführungsgehäuse (2) hinter dem Heizer (H) und vor oder in Höhe von Austrittsöffnungen zu den Luftkanälen für den Fondbereich im Verhältnis zur Gesamten Querschnittsfläche vergrößert.

6. Kraftfahrzeug-Klimaanlage nach einem der vorhergehenden Ansprüche, **dadurch gekennzeichnet, dass** die Klimaanlage (1) eine Unterteilung der Front-Klimazonen (ZI, ZII) in einen oberen Bereich und den Fußraum vorsieht.

7. Kraftfahrzeug-Klimaanlage nach einem der vorhergehenden Ansprüche, **dadurch gekennzeichnet, dass** mindestens ein Luftkanal (L4, L5) aus dem Bereich (III, IV) von dem besagter Luftkanal (L3) abzweigt, zu einer weiteren Klimaanlage (1') und/oder einem weiteren Gebläse (G) führt.

8. Kraftfahrzeug-Klimaanlage nach Anspruch 7, **dadurch gekennzeichnet, dass** die weitere Klimaanlage (1') eine mindestens zweizonige HeckKlimaanlage ist.

9. Kraftfahrzeug-Klimaanlage nach Anspruch 7 oder 8, **dadurch gekennzeichnet, dass** in einem Luftkanal (L4-L5') von der Front-Klimaanlage (1) zur Heck-Klimaanlage (1') eine Öffnung zum Fahrzeuginnenraum und/oder zur Umgebung hin vorgesehen ist, welche durch eine Klappe regelbar öffen- und verschließbar ist.

10. Kraftfahrzeug-Klimaanlage nach Anspruch 7, **dadurch gekennzeichnet, dass** in Verbindung mit einem zusätzlichen Gebläse (G) mittels Fondklappen regelbare Abgänge (F1-F4) zum Fondbereich vorgesehen sind.

## Claims

1. A multi-zone motor vehicle air conditioning system with more than two zones having at least one heater (H) and at least one evaporator (V) which are arranged in an air conduction housing (2), wherein at least one separating wall (WH) is provided in the interior of the air conduction housing (2), separating the air conduction housing (2) into at least two areas (I-II, III-IV) and thereby separating the air flow to be conducted to the vehicle interior into partial air flows which are conditioned in the air conduction housing (2) and then conducted to climate zones (ZI-ZIV), wherein an air duct (L3) branches off from at least one first area (III or IV) of the air conduction housing (2) and supplies another climate zone (ZI or ZII) of the vehicle interior with a conditioned partial air flow than the one or more other air ducts (L4, L5) branching off from this first area (III or IV) of the air conduction housing (2), **characterised in that** the air duct (L3f) branching off from this first area (III or IV) of the air conduction housing (2) leads to the footwell of the front area on the driver's side and **in that** an air duct (L1f) branches off to the centre nozzle on the driver's side and an air duct (L2f) branches off to the side nozzle on the driver's side in the front area from the second area (I or II) separated from the first area (III or IV) by the separating wall (WH).

2. The motor vehicle air conditioning system as claimed in claim 1, **characterised in that** the separating wall (WH), which separates the outlet openings of the areas (I, II and III, IV) of the air conduction housing (2) from one another, is arranged horizontally or approximately horizontally.

3. The motor vehicle air conditioning as claimed in claim 2, **characterised in that** the separating wall (WH) has an offset in the direction of the areas (I and II) assigned to the front area.

4. The motor vehicle air conditioning as claimed in one of the preceding claims, **characterised in that** the free cross-sectional area is reduced perpendicular to the direction of the air flow through the air conduction housing (2) behind the heater (H) and in front of or at the level of outlet openings to the air ducts for the front area in relation to the total cross-sectional area.

5. The motor vehicle air conditioning as claimed in one of the preceding claims, **characterised in that** the free cross-sectional area is increased perpendicular to the direction of the air flow through the air conduction housing (2) behind the heater (H) and in front of or at the level of outlet openings to the air ducts for the rear area in relation to the total cross-sectional area.

6. The motor vehicle air conditioning system as claimed in one of the preceding claims, **characterised in that** the air conditioning system (1) provides for a subdivision of the front climate zones (ZI, ZII) into an upper area and the footwell.

7. The motor vehicle air conditioning system as claimed in one of the preceding claims, **characterised in that** at least one air duct (L4, L5) from the area (III, IV) from which said air duct (L3) branches off leads to a further air conditioning system (1') and/ or a further fan (G).

8. The motor vehicle air conditioning system as claimed in claim 7, **characterised in that** the further air conditioning system (1') is a rear air conditioning system with at least two zones.

9. The motor vehicle air conditioning system as claimed in claim 7 or 8, **characterised in that** an opening to the vehicle interior and/or to the environment is provided in an air duct (L4-L5') from the front air conditioning system (1) to the rear air conditioning system (1') and can be variably opened and closed by a flap.

10. The motor vehicle air conditioning system as claimed in claim 7, **characterised in that** outlets (F1-F4) to the rear area, which can be regulated by means of rear flaps, are provided in connection with an additional fan (G).

## Revendications

1. Système de climatisation d'un véhicule automobile, à zones multiples, comprenant plus de deux zones, système de climatisation comprenant au moins un dispositif de chauffage (H) et au moins un évaporateur (V) qui sont disposés dans un carter de guidage d'air (2), où il est prévu, à l'intérieur du carter de guidage d'air (2), au moins une paroi de séparation (WH) qui subdivise le carter de guidage d'air (2) en au moins deux zones (I - II, III - IV) et, de ce fait, sépare le flux d'air à fournir à l'habitacle du véhicule, en flux d'air partiels qui sont conditionnés dans le carter de guidage d'air (2) et fournis ensuite à des zones de climatisation (ZI - ZIV), où un conduit d'air (L3) se ramifie à partir d'au moins une première zone (III ou IV) du carter de guidage d'air (2), lequel conduit d'air fournit un flux d'air partiel conditionné d'une autre zone de climatisation (ZI ou ZII) de l'habitacle du véhicule, comme le ou les autres conduits d'air (L4, L5) qui se ramifient à partir de cette première zone (III ou IV) du carter de guidage d'air (2), **caractérisé en ce que** le conduit d'air (L3f) se ramifiant à partir de cette première zone (III ou IV) du carter de guidage d'air (2) va jusqu'à l'espace pour les pieds, situé dans le secteur avant côté conducteur, et un conduit d'air (L1f) menant à la buse centrale, côté conducteur, et un conduit d'air (L2f) menant à la buse latérale, côté conducteur, du secteur avant, se ramifient à partir de la deuxième zone (I ou II) séparée de la première zone (III ou IV) par la paroi de séparation (WH).

2. Système de climatisation d'un véhicule automobile selon la revendication 1, **caractérisé en ce que** la paroi de séparation (WH), qui sépare les unes des autres les ouvertures de sortie des zones (I, II et III, IV) du carter de guidage d'air (2), est disposée en s'étendant de manière horizontale ou presque horizontale.

3. Système de climatisation d'un véhicule automobile selon la revendication 2, **caractérisé en ce que** la paroi de séparation (WH) présente un décalage en direction des zones (I et II) qui sont associées au secteur avant.

4. Système de climatisation d'un véhicule automobile selon l'une quelconque des revendications précédentes, **caractérisé en ce que** la surface de section libre, perpendiculaire à la direction d'écoulement d'air passant par le carter de guidage d'air (2), diminue par rapport à la surface de section totale, derrière le dispositif de chauffage (H) et devant ou à hauteur d'ouvertures de sortie donnant sur les conduits d'air prévus pour le secteur avant.

5. Système de climatisation d'un véhicule automobile selon l'une quelconque des revendications précédentes, **caractérisé en ce que** la surface de section libre, perpendiculaire à la direction d'écoulement d'air passant par le carter de guidage d'air (2), augmente par rapport à la surface de section totale, derrière le dispositif de chauffage (H) et devant ou à hauteur d'ouvertures de sortie donnant sur les conduits d'air prévus pour le secteur arrière.

6. Système de climatisation d'un véhicule automobile selon l'une quelconque des revendications précédentes, **caractérisé en ce que** le système de climatisation (1) prévoit une subdivision des zones de climatisation avant (ZI, ZII), dans une zone supérieure et dans l'espace pour les pieds.

7. Système de climatisation d'un véhicule automobile selon l'une quelconque des revendications précédentes, **caractérisé en ce qu'**au moins un conduit d'air (L4, L5) se ramifie à partir de la zone (III, IV) dudit conduit d'air (L3) et va jusqu'à un autre système de climatisation (1') et / ou jusqu'à un autre pulseur (G).

8. Système de climatisation d'un véhicule automobile selon la revendication 7, **caractérisé en ce que** l'autre système de climatisation (1') est un système de climatisation arrière comprenant au moins deux zones.

9. Système de climatisation d'un véhicule automobile selon la revendication 7 ou 8, **caractérisé en ce qu'**il est prévu, dans un conduit d'air (L4 - L5') allant du système de climatisation avant (1) jusqu'au système de climatisation arrière (1'), une ouverture donnant sur l'habitacle du véhicule et / ou sur l'environnement, laquelle ouverture peut être ouverte et fermée en étant réglable par un volet.

10. Système de climatisation d'un véhicule automobile selon la revendication 7, **caractérisé en ce qu'**il est prévu, en liaison avec un pulseur supplémentaire (G), des sorties (F1 - F4) donnant sur le secteur arrière et réglables au moyen de volets arrière.
